# EUROPÄISCHE PATENTSCHRIFT

(11) **EP 3 785 355 B1**
(45) Veröffentlichungstag und Bekanntmachung des Hinweises auf die Patenterteilung: **15.01.2025**
(21) Anmeldenummer: 19746005.8
(22) Anmeldetag: 10.07.2019
(51) Int. Cl.: H02K 1/02, H02K 1/04, H02K 15/02

(54) **VERFAHREN ZUR HERSTELLUNG EINER MATERIALLAGE UND EINES MATERIALLAGENGEFÜGES FÜR EINE DYNAMOELEKTRISCHE ROTATORISCHE MASCHINE**
METHOD FOR PRODUCING A MATERIAL LAYER AND A MATERIAL LAYER STRUCTURE FOR A DYNAMOELECTRIC ROTARY MACHINE
PROCÉDÉ DE FABRICATION D'UNE COUCHE DE MATÉRIAU ET D'UNE STRUCTURE DE COUCHE DE MATÉRIAU POUR UNE MACHINE ROTATIVE DYNAMOÉLECTRIQUE

(30) Priorität: 13.07.2018 EP 18183457
(43) Veröffentlichungstag der Anmeldung: 03.03.2021
(73) Patentinhaber: Siemens Aktiengesellschaft, 80333 München (DE)
(72) Erfinder: SEUFERT, Reiner, 97616 Salz (DE); VOLLMER, Rolf, 36129 Gersfeld (DE)
(74) Vertreter: Siemens Patent Attorneys
(86) Internationale Anmeldenummer: PCT/EP2019/068480
(87) Internationale Veröffentlichungsnummer: WO 2020/011823

(56) Entgegenhaltungen:
- EP-A1- 3 255 758
- WO-A1-2013/126546

## Beschreibung

Die Erfindung betrifft ein Verfahren zur Herstellung einer Materiallage mit einer Lagendicke zwischen 0,5 und 500 µm.

Zum magnetischen Kreis einer dynamoelektrischen rotatorischen Maschine gehören ein Stator und ein Rotor. Der Rotor und der Stator stellen die leistungserzeugenden Komponenten, auch Aktivteile genannt, der dynamoelektrischen rotatorischen Maschine dar und werden bisher als Blechpakete gefertigt.

Die Patentschrift WO 2013/126546 A1 offenbart eine Zusammensetzung zur Bildung eines Stators oder eines Teils davon, umfassend ein härtbares Elastomer, eine Faser, eine Farbdispersionsverbindung und Ruß.

Die Patentschrift EP 3 255 758 A1 zeigt einen Rotor für eine Reluktanzmaschine mit in axialer Richtung abwechselnd angeordneten Leiterschichten und Isolationsschichten, wobei die Leiterschichten magnetflussleitende Leiterbereiche aufweisen und die Isolationsschichten elektrisch isolierend sind. Der Rotor ist wenigstens teilweise durch additive Fertigung hergestellt.

Die heutigen Blechpakete umfassen Bleche, welche aus gewalzten Großblechen aus weichmagnetischem Material herausgeschnitten bzw. gestanzt werden. Die Bleche werden anschließend zum Blechpaket paketiert.

Bei einer konventionellen Fertigung von Großblechen durch Walzen können keine Bleche gefertigt werden, die dünner als 100 µm sind. Zudem fällt beim Herausschneiden bzw. Stanzen der Bleche aus den Großblechen Abfall an.

Der Erfindung liegt daher die Aufgabe zugrunde, die Herstellung von Blechen für dynamoelektrische rotatorische Maschinen zu verbessern.

Die Lösung der Aufgabe gelingt durch ein Verfahren gemäß Anspruch 1, d. h. ein Verfahren zur Herstellung einer Materiallage mit einer Lagendicke zwischen 0,5 und 500 µm mit folgenden Schritten:
- Aufbringen einer Suspension, aufweisend wenigstens ein Bindemittel und Festteilchen, durch eine Schablone auf eine Grundfläche zum Erhalt eines Grünkörpers,
- Austreiben des Bindemittels aus dem Grünkörper, insbesondere mittels Entbinderung,
- Schaffen eines dauerhaften Zusammenhalts der Festteilchen durch Erwärmung und/oder mittels Verdichtung, insbesondere mittels Sinterung.

Ferner gelingt die Lösung der Aufgabe durch eine Materiallage gemäß Anspruch 8 sowie ein Verfahren zur Herstellung eines Materiallagengefüges für einen Rotor einer dynamoelektrischen rotatorischen gemäß Anspruch 13.

Die Lösung der Aufgabe gelingt überdies durch ein Materiallagengefüge gemäß Anspruch 15 für einen Rotor einer dynamoelektrischen rotatorischen Maschine, wobei das Materiallagengefüge eine Mehrzahl übereinander angeordneter Materiallagen aufweist, einen Rotor einer dynamoelektrischen rotatorischen Maschine, aufweisend ein derartiges Materiallagengefüge, sowie eine dynamoelektrische rotatorische Maschine.

Die Materiallage hat vorteilhaft die bisherigen Funktionen eines konventionellen Blechs in einem konventionellen Rotor-Blechpaket inne und nimmt die Aufgaben eines Blechs wahr.

Vorteilhaft entspricht ein Umriss der Materiallage im Wesentlichen dem Umriss eines Blechs.

Die Materiallage ist vorteilhaft dünner hergestellt und/oder dünner herstellbar als ein Blech.

Das Materiallagengefüge hat vorteilhaft die bisherigen Funktionen eines Rotor-Blechpakets inne und nimmt die Aufgaben eines Rotor-Blechpakets wahr.

Die Materiallagen sind zur Schaffung des Materiallagengefüges übereinander angeordnet. Vorzugsweise sind die Materiallagen in Richtung einer Rotationsache, in anderen Worten: entlang einer Rotationsachse, des Materiallagengefüges angeordnet.

Auch andere Anordnungen, bei welchen vorzugsweise wenigstens zwei Materiallagen benachbart sind, sind denkbar.

Die Materiallage weist vorzugsweise eine im Wesentlichen runde, im Wesentlichen mittig angeordnete Materialaussparung auf. Das Materiallagengefüge weist vorzugsweise eine zylindrische Materialaussparung entlang der Rotationsachse zur Anbindung an eine Welle auf.

Bei einer besonders stabilen Materiallagenausführung weist die Materiallage vorzugsweise eine Lagendicke zwischen 10 und 100 µm auf.

Die Suspension wird vorzugsweise mit einer Rakel aufgetragen.

Die Suspension weist wenigstens ein, insbesondere mittels Entbinderung, austreibbares Bindemittel und Festteilchen auf.

Das Bindemittel ist vorzugsweise ein organisches Bindemittel. Das Bindemittel ist vorzugsweise so beschaffen, dass es bei Erwärmung vollständig bzw. nahezu vollständig in gasförmige Bestandteile dissoziiert.

Die Festteilchen liegen vorzugsweise als Pulver vor. Ein Festteilchen umfasst vorzugsweise wenigstens ein magnetisch und/oder elektrisch leitfähiges Material.

Das Festteilchen weist vorzugsweise einen Durchmesser zwischen 0,1 und 100 µm auf.

Das Festteilchen weist in einer besonderen Ausführung vorzugsweise einen Durchmesser zwischen 0,5 und 10 µm auf. Je geringer der Durchmesser der Festteilchen ist, desto dünnere Materiallagen können hergestellt werden. Beispielsweise kann mittels einer Suspension, welche Festteilchen mit einem Durchmesser von 0,5 µm aufweist, eine 0,5 µm dünne Materiallage hergestellt werden.

Das Pulver kann Festteilchen ausschließlich eines Materials umfassen oder eine Pulvermischung, umfassend wenigstens zwei unterschiedliche Materialien, sein.

Das Pulver kann hinsichtlich Festigkeit, magnetischer Charakteristik, elektrischer Charakteristik und Wärmeleitung angepasst werden.

Die Festteilchen werden durch Erwärmung und/oder mittels Verdichtung, insbesondere mittels Sinterung, dauerhaft verbunden.

Die Sinterung ist vorzugsweise ein thermischer Prozess, der insbesondere von den eingesetzten Materialien abhängig ist. Beispielsweise ist eine Temperatur bzw. ein Temperaturband von einer Legierung des Materials, anderen Zusätzen und einem gewünschten Ergebnis (nach der Sinterung) abhängig.

Die Schablone ist vorzugsweise eine Vorlage zum Übertragen gewünschter Formen und/oder Umrisse und/oder Muster und/oder Aussparungen etc. Die Schablone kann beliebig oft verwendet werden.

Mittels der Schablone kann genau die Form der Materiallage gebildet werden, die gewünscht ist. So entsteht kein Abfall. Es können auch zwei oder mehr Schablonen für eine Materiallage verwendet werden.

Die Schablone kann schnell und günstig (insbesondere schneller als ein Stanzwerkzeug) modifiziert werden.

Es können auch filigrane Formen von der Schablone abgebildet werden. Die Materiallagen mit filigranen Formen sind besonders vorteilhaft für einen Leichtbau von dynamoelektrischen rotatorischen Maschinen, Kühlung und magnetische Streuung.

In einer weiteren vorteilhaften Ausführungsform der Erfindung wird auf die Materiallage auf wenigstens einer Lagenseite ein Isolationsmaterial aufgebracht.

Vorzugsweise ist das Isolationsmaterial eine Keramik, insbesondere eine amagnetische Oxidkeramik, beispielsweise Zirconiumoxid oder Aluminiumoxid.

Das aufgebrachte Isolationsmaterial dient vorzugsweise einer elektrischen Isolation.

Das aufgebrachte Isolationsmaterial dient vorzugsweise einer elektrischen Isolation einer Materiallage gegenüber wenigstens einer weiteren Materiallage, wenn wenigstens zwei oder mehr Materiallagen, insbesondere zur Schaffung eines Materiallagengefüges, übereinander angeordnet werden.

Das vorteilhaft aufgebrachte Isolationsmaterial verhindert also eine Stromführung von einer Materiallage auf eine andere Materiallage.

In einer weiteren vorteilhaften Ausführungsform der Erfindung wird auf die Materiallage auf beiden Lagenseiten ein Isolationsmaterial aufgebracht.

Wird auf die Materiallage auf nur einer Lagenseite das Isolationsmaterial aufgebracht, ist die Materiallage dünner. Wird auf die Materiallage auf beiden Lagenseiten das Isolationsmaterial aufgebracht, ist die Materiallage besser isoliert.

In einer weiteren vorteilhaften Ausführungsform der Erfindung wird auf die Materiallage ein Lack, insbesondere Backlack, aufgebracht.

Der Lack, insbesondere Backlack, kann das Isolationsmaterial sein. Jedoch können Lack und Isolationsmaterial auch zwei unterschiedliche Materialien sein.

Der vorteilhaft aufgebrachte Backlack ermöglicht eine besonders gute elektrische Isolation der Materiallage, insbesondere gegenüber einer benachbarten weiteren Materiallage in einem Materiallagengefüge.

Ferner ist die Materiallage, insbesondere mittels des Backlacks, mit der benachbarten Materiallage bzw. den benachbarten Materiallagen verfestigbar.

Der vorteilhaft aufgebrachte Backlack ermöglicht eine hohe Festigkeit und Steifigkeit des Materiallagengefüges, da die Materiallagen flächig verbunden sind. Dies reduziert auch Vibrationen und Geräusche.

In einer weiteren vorteilhaften Ausführungsform der Erfindung umfassen die Festteilchen Teilchen aus elektrisch und/oder magnetisch leitfähigem Material, insbesondere Metallteilchen.

Vorzugsweise ist das elektrisch leitfähige Material Silber, Kupfer, Gold, Aluminium, Wolfram, Eisen und/oder Stahl und/oder deren Legierungen. Es sind jedoch auch andere elektrisch leitfähige Materialien denkbar.

Vorzugsweise ist das magnetisch leitfähige Material ein ferromagnetisches Material.

In einer weiteren vorteilhaften Ausführungsform der Erfindung umfassen die Festteilchen Teilchen aus weichmagnetischem Material.

Beispielsweise ist das weichmagnetische Material Eisen, Nickel, Kobalt und/oder deren Legierungen. Es sind jedoch auch andere magnetisch leitfähige, insbesondere ferromagnetische, Materialien denkbar.

In einer weiteren vorteilhaften Ausführungsform der Erfindung ist die Suspension strukturviskos.

Dies hat den Vorteil, dass die Suspension während des Auftragens auf die Grundfläche zur Erzeugung des Grünkörpers, vorzugsweise mit der Rakel, weniger viskos ist und die gewünschte Form durch die Schablone optimal übertragen werden kann. Ist das Auftragen beendet, behält der Grünkörper die gewünschte Form bei.

Die Erfindung betrifft überdies eine Materiallage, die auf die beschriebene Weise hergestellt ist, wobei die Materiallage eine Lagendicke zwischen 0,5 und 500 µm, insbesondere zwischen 10 und 100 µm, aufweist, wobei die Materiallage ein weichmagnetisches Material aufweist, wobei die Materiallage auf wenigstens einer Lagenseite ein Isolationsmaterial aufweist.

In einer weiteren vorteilhaften Ausführungsform der Erfindung weist die Materiallage auf beiden Lagenseiten ein Isolationsmaterial auf.

In einer weiteren vorteilhaften Ausführungsform der Erfindung weist die Materiallage Lack, insbesondere Backlack, auf.

In einer weiteren vorteilhaften Ausführungsform der Erfindung ist die Materiallage mit wenigstens einer weiteren Materiallage verfestigbar.

In einer weiteren vorteilhaften Ausführungsform der Erfindung weist die Materiallage eine im Wesentlichen mittig angeordnete Materialaussparung auf.

Vorzugsweise ist die Materialaussparung im Wesentlichen kreisrund. Die Materialaussparung ermöglicht eine Anbindung an eine Welle.

Die Erfindung betrifft zudem ein Verfahren zur Herstellung des Materiallagengefüges für den Rotor der dynamoelektrischen rotatorischen Maschine mit folgenden Schritten:
- Additive Fertigung einer ersten Materiallage, wobei die erste Materiallage wenigstens eine Materialschicht umfasst,
- Aufbringen eines Isolationsmaterials auf die erste Materiallage,
- Additive Fertigung wenigstens einer weiteren Materiallage, wobei die wenigstens eine weitere Materiallage wenigstens eine Materialschicht umfasst,
- Aufbringen eines Isolationsmaterials auf die wenigstens eine weitere Materiallage,
- Zusammenfügen der ersten und der wenigstens einen weiteren Materiallage,
- Gegenseitiges Verfestigen der Materiallagen.

Die Materiallage umfasst wenigstens eine Materialschicht, d.h. nur eine Schicht der Festteilchen. Die Materiallage ist dadurch besonders dünn. Um eine stabile Materiallage zu erhalten, sind jedoch zwei oder mehr Materialschichten übereinander vorteilhaft.

Das aufgebrachte Isolationsmaterial ist in einer bevorzugten Ausführungsform Lack, insbesondere Backlack. Das Aufbringen von Backlack gelingt leicht und durch Verbacken können zwei oder mehr Materiallagen gegenseitig verfestigt werden.

Das Isolationsmaterial, insbesondere der Backlack, und die Materiallage sind vorzugsweise stoffschlüssig verbunden.

In einer alternativen Ausführungsform ist das Isolationsmaterial Keramik.

Als Isolationsmaterial sind zudem Wasserglas sowie andere Gläser denkbar.

Auch andere Isolationsmaterialien sind möglich.

Das Aufbringen eines keramischen Isolationsmaterials gelingt besonders gut, wenn eine keramische Suspension, umfassend Keramik-Festteilchen und austreibbares Bindemittel, mit einer Rakel auf die Materiallage aufgetragen wird. Die Keramik-Festteilchen liegen vorzugsweise als Keramik-Pulver vor.

Die Keramik-Festteilchen können Magnesiumoxid, Titandioxid, Siliciumcarbid, Siliciumnitrid, Borcarbid, Bornitrid und/oder Aluminiumnitrid aufweisen. Auch andere Materialien sind denkbar.

Bevorzugt wird jedoch eine Oxidkeramik, insbesondere Zirconiumoxid und/oder Aluminiumoxid.

Ein Keramik-Festteilchen weist vorzugsweise im Wesentlichen einen Durchmesser zwischen 0,1 und 2 µm auf.

Je geringer der Durchmesser der Keramik-Festteilchen ist, desto dünnere isolierte Materiallagen können hergestellt werden. Beispielsweise kann mittels einer Suspension, welche Festteilchen mit einem Durchmesser von 0,5 µm aufweist und einer Suspension, die Keramik-Festteilchen mit einem Durchmesser von 1 µm aufweist, eine 1,5 µm dünne einseitig isolierte Materiallage bzw. eine 2,5 µm dünne beidseitig isolierte Materiallage hergestellt werden.

Bei einer besonders dünnen Materiallageausführung weist die Materiallage eine Lagendicke von 1 µm auf.

Die Keramik-Festteilchen bilden wenigstens eine Materialschicht. Es sind jedoch auch zwei oder mehr Materialschichten möglich.

Das Keramik-Pulver kann Keramik-Festteilchen ausschließlich eines Materials umfassen oder eine Keramik-Pulvermischung, umfassend wenigstens zwei unterschiedliche Keramik-Materialien, sein.

Die Keramik-Festteilchen werden durch Erwärmung und/oder mittels Verdichtung, insbesondere mittels Sinterung, dauerhaft verbunden. Die Keramik-Festteilchen werden vorzugsweise mit den Festteilchen durch Erwärmung und/oder mittels Verdichtung, insbesondere mittels Sinterung, dauerhaft verbunden. Die dauerhafte Verbindung ist vorzugsweise eine stoffschlüssige Verbindung.

In einer weiteren vorteilhaften Ausführungsform der Erfindung wird mittels einer Mehrzahl an Materiallagen mit einer Lagendicke von 0,5 bis 500 µm ein Materiallagengefüge hergestellt.

Das Materiallagengefüge ist für einen Rotor einer dynamoelektrischen rotatorischen Maschine geeignet, wobei das Materiallagengefüge eine Mehrzahl in Richtung einer Rotorachse des Materiallagengefüges angeordnete Materiallagen aufweist.

Der Rotor der dynamoelektrischen rotatorischen Maschine weist ein derartiges Materiallagengefüge auf.

Die Erfindung betrifft ferner eine dynamoelektrische rotatorische Maschine aufweisend einen derartigen Rotor.

Die dynamoelektrische rotatorische Maschine umfasst einen Rotor mit einer Mehrzahl an übereinander angeordneten Materiallagen. Die Materiallagen sind vorzugsweise jeweils einzeln gegeneinander elektrisch isoliert ausgebildet. Die Anordnungsebenen sind dazu vorteilhaft parallel zur Richtung des magnetischen Flusses ausgebildet.

Da die Materiallagen nur eine sehr geringe Lagendicke aufweisen, werden Wirbelstromverluste deutlich reduziert. Denn ein Wirbelstrom kann sich nur innerhalb der Lagendicke der Materiallage ausbilden, wodurch bei dünnen Materiallagen die Wirbelstromstärke erheblich reduziert ist.

Die Isolation zwischen den einzelnen Materiallagen verhindert, dass sich die Wirbelströme zu großen, verlustreichen Wirbelströmen überlagern können.

Die Erfindung findet vorzugsweise Anwendung bei dynamoelektrischen rotatorischen Maschinen. Jedoch kann die Erfindung auch bei anderen Energiewandlern, wie z. B. Transformatoren, eingesetzt werden.

Die Erfindung ist überdies anwendbar für einen Stator einer dynamoelektrischen rotatorischen Maschine. Hierbei ersetzt vorzugsweise eine Mehrzahl an übereinander angeordneten Materiallagen ein konventionelles Stator-Blechpaket.

Die Erfindung eignet sich besonders gut für Motoren, die eine hohe Leistung bei geringem Gewicht fordern, insbesondere bei Flugzeugen, Helikoptern und Rennwagen der Formel E.

Im Folgenden wird die Erfindung anhand der in den Figuren gezeigten Ausführbeispiele näher beschrieben und erläutert. Es zeigen:
- FIG 1: das erfindungsgemäße Verfahren zur Herstellung einer Materiallage mit einer Lagendicke zwischen 0,5 und 500 µm,
- FIG 2: die Materiallage,
- FIG 3: die Materiallage in einer Seitenansicht,
- FIG 4: ein Verfahren zur Herstellung eines Materiallagengefüges für einen Rotor einer dynamoelektrischen rotatorischen Maschine,
- FIG 5: einen Rotor der dynamoelektrischen rotatorischen Maschine und
- FIG 6: eine Seitenansicht der dynamoelektrischen rotatorischen Maschine.

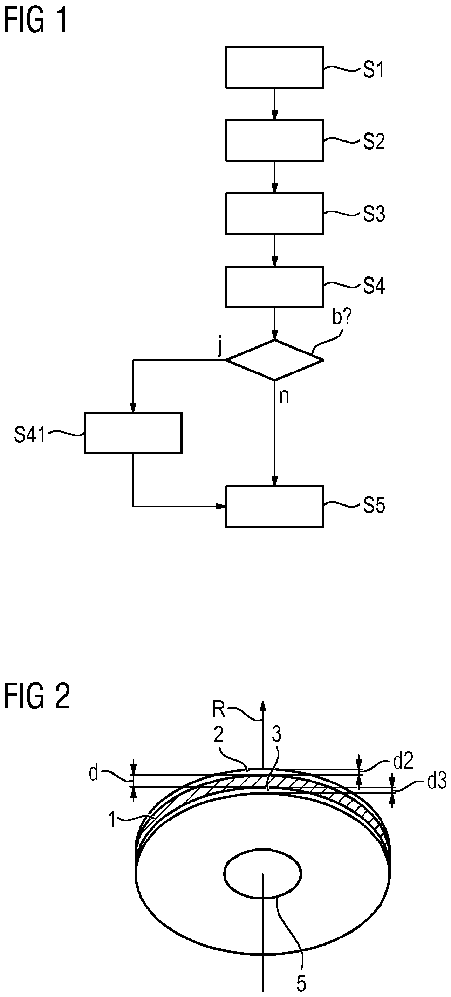

FIG 1 zeigt das erfindungsgemäße Verfahren zur Herstellung einer Materiallage mit einer Lagendicke zwischen 0,5 und 500 µm.

Vorzugsweise beträgt die Lagendicke zwischen 10 und 100 µm für eine stabile Materiallage.

In einem Verfahrensschritt S1 wird eine Suspension aufweisend wenigstens ein Bindemittel und Festteilchen, durch eine Schablone auf eine Grundfläche zum Erhalt eines Grünkörpers aufgebracht. Aufgebracht bedeutet hierbei vorzugsweise: Auf die Grundfläche wird die Suspension mit einer Rakel aufgebracht.

In einem Verfahrensschritt S2 wird das Bindemittel aus dem Grünkörper, insbesondere mittels Entbinderung, ausgetrieben.

In einem Verfahrensschritt S3 wird ein dauerhafter Zusammenhalt der Festteilchen durch Erwärmung und/oder mittels Verdichtung, insbesondere mittels Sinterung, geschaffen.

In einem Verfahrensschritt S4 wird auf eine Lagenseite Isolationsmaterial aufgebracht. Aufgebracht bedeutet hierbei vorzugsweise: Auf die Lagenseite wird Isolationsmaterial mit einer Rakel aufgebracht oder die Lagenseite wird mit einem Streichwerkzeug bestrichen oder die Lagenseite wird in ein das Isolationsmaterial beinhaltende Gefäß eingetaucht.

Vorzugsweise ist das Isolationsmaterial Lack, insbesondere Backlack.

Es sind jedoch auch andere Isolationsmaterialien denkbar. Beispielsweise kann das Isolationsmaterial mittels einer keramischen Suspension, aufweisend wenigstens ein Bindemittel und keramische Festteilchen, auf die Lagenseite aufgebracht werden und das Bindemittel, insbesondere mittels Entbinderung, ausgetrieben werden.

Zudem besteht die Möglichkeit, ein Isolationsmaterial in einem nicht gezeigten Verfahrensschritt S4a aufzubringen und zusätzlich Lack, insbesondere Backlack, in einem nicht gezeigten Verfahrensschritt S4b aufzubringen.

Wenn beide Lagenseiten mit Isolationsmaterial und/oder Lack versehen werden sollen - mit b? und j gekennzeichnet - wird dies in einem Verfahrensschritt S41 bewerkstelligt.

Wenn nur eine Lagenseite mit Isolationsmaterial und/oder Lack versehen werden soll, wird im Verfahren mittels b? und n die Materiallage in einem Verfahrensschritt S5 fertiggestellt.

FIG 2 zeigt die Materiallage 1.

Die Materiallage 1 weist die Lagendicke d auf. Die Materiallage ist vorzugsweise einstückig.

Vorzugsweise weist jede Materiallage 1 auf wenigstens einer Lagenseite ein Isolationsmaterial auf. Die Figur zeigt eine Ausführung, wonach jede Materiallage 1 auf beiden Lagenseiten ein Isolationsmaterial aufweist. Das Isolationsmaterial ist in der Figur Lack, insbesondere Backlack. Dies entspricht einer bevorzugten Ausführung.

Vorzugsweise sind das Isolationsmaterial und die Materiallage stoffschlüssig verbunden.

Die Materiallage 1 weist auf einer oberen Lagenseite Lack 2 mit einer Isolationsdicke d2 und auf einer unteren Lagenseite Lack 3 mit einer Isolationsdicke d3 auf.

Es ist auch möglich, dass die Materiallage 1 ein andersartiges Isolationsmaterial und zusätzlich Lack aufweist. Es ist auch möglich, dass die Materiallage 1 ein andersartiges Isolationsmaterial auf einer Lagenseite und Lack auf der anderen Lagenseite aufweist. Es ist auch möglich, dass die Materiallage 1 eine Mischform aus andersartigem Isolationsmaterial und Lack aufweist.

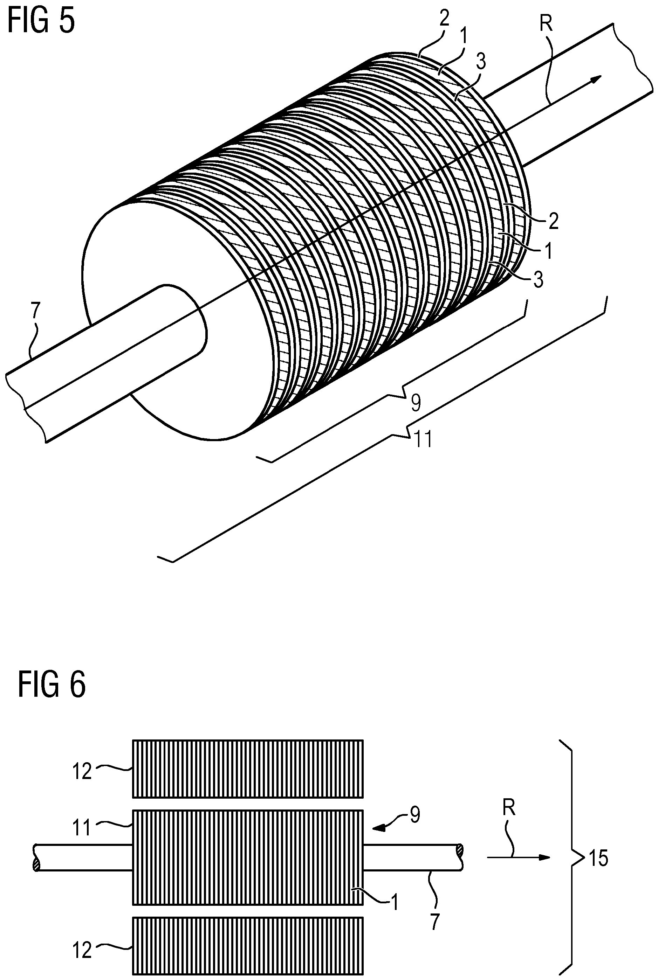

Die Figur zeigt zudem eine mittig angeordnete Materialaussparung 5 (zur späteren Anbindung an eine Welle, siehe FIG 5). Durch einen Mittelpunkt der Materialaussparung 5 führt eine Rotationsachse R.

Die beschriebenen Bezugszeichen sind auch für die folgenden Figuren gültig, sofern sie in den Ausführungsbeispielen vorhanden sind, und werden aus Übersichtsgründen nicht erneut erläutert.

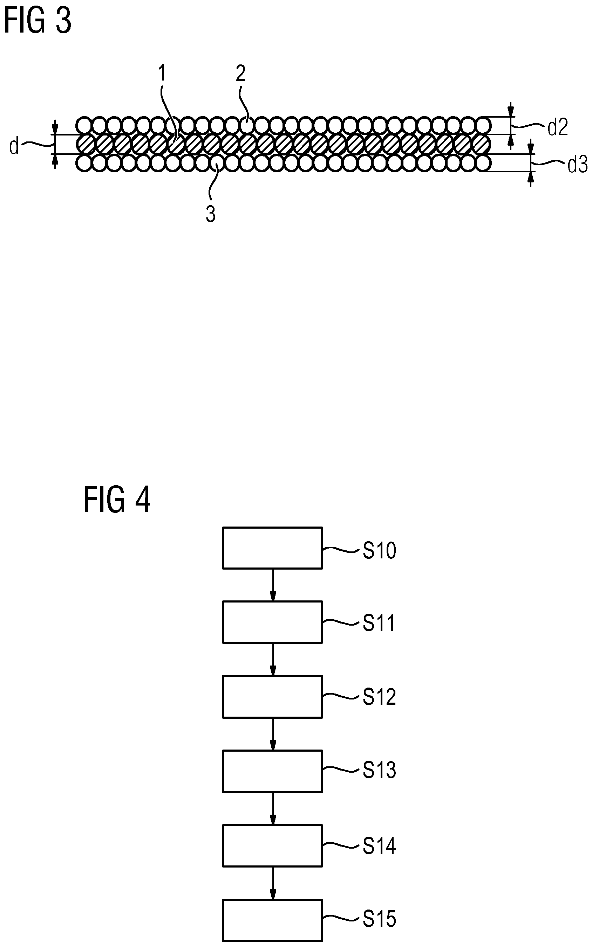

FIG 3 zeigt die Materiallage 1 in einer Seitenansicht.

Die Figur zeigt die dünnste Ausführung der Materiallage 1, da nur eine Schicht aus Festteilchen die Materiallage 1 bildet. Die Festteilchen sind in der Figur granulares Material. In anderen Worten: Die Festteilchen sind kleine Kügelchen, die nebeneinander liegen und, vorzugsweise durch die in FIG 1 beschriebene Sinterung, miteinander verbunden sind.

Die Lagendicke d entspricht in der Figur einem Durchmesser eines Festteilchens.

Ebenso zeigt die Figur nur eine Schicht des Isolationsmaterials 2 auf der oberen Lagenseite und nur eine Schicht des Isolationsmaterials 3 auf der unteren Lagenseite. Die Isolationsdicke d2 und die Isolationsdicke d3 entsprechen in der Figur einem Durchmesser eines Keramik-Festteilchens oder eines Lack-Festteilchens.

Es können jedoch auch zwei oder mehr Festteilchen übereinander die Materiallage 1 bilden. Es können auch zwei oder mehr Keramik-Festteilchen übereinander die Isolation bilden. Es können auch zwei oder mehr Lack-Festteilchen übereinander die Isolation bilden.

FIG 4 zeigt ein Verfahren zur Herstellung eines Materiallagengefüges für einen Rotor einer dynamoelektrischen rotatorischen Maschine.

In einem Verfahrensschritt S10 wird eine erste Materiallage additiv gefertigt, wobei die erste Materiallage wenigstens eine Materialschicht umfasst.

In einem Verfahrensschritt S11 folgt ein Aufbringen eines Isolationsmaterials auf die erste Materiallage. Das Isolationsmaterial ist hierbei vorzugsweise Lack, insbesondere Backlack. Das Isolationsmaterial kann jedoch auch Keramik oder ein anderer Stoff sein.

In einem Verfahrensschritt S12 wird wenigstens eine weitere Materiallage additiv gefertigt, wobei die wenigstens eine weitere Materiallage wenigstens eine Materialschicht umfasst.

In einem Verfahrensschritt S13 folgt ein Aufbringen eines Isolationsmaterials auf die wenigstens eine weitere Materiallage.

In einem Verfahrensschritt S14 werden die erste und die wenigstens eine weitere Materiallage zusammengefügt.

In einem Verfahrensschritt S15 werden die Materiallagen gegenseitig verfestigt. Wurde Backlack auf die Materiallagen in den Verfahrensschritten S11 bzw. S13 aufgebracht, werden die Materiallagen durch Verbacken miteinander verfestigt.

Verbacken bedeutet hierbei: Die Materiallagen werden vorzugsweise mittels Druck und Wärme miteinander verklebt. Durch Druck und Wärme wird der Backlack weich, klebt die Materiallagen aneinander und härtet aus. Dies hat gegenüber anderen Verbindungsmöglichkeiten wie Schweißen, Stanzpaketieren und Nieten den Vorteil, dass die Materiallagen keine werkstoffschädigenden Kontaktstellen aufweisen. Zudem wird ein Magnetfluss nicht gestört und es entstehen keine Materialspannungen und Materialverformungen.

Das gezeigte Verfahren eignet sich auch für einen Stator einer dynamoelektrischen rotatorischen Maschine.

FIG 5 zeigt einen Rotor 11 der dynamoelektrischen rotatorischen Maschine.

Der Rotor 11 weist ein Materiallagengefüge 9 auf. Das Materiallagengefüge umfasst in der Figur eine Mehrzahl an entlang der Rotationsachse übereinander angeordneten Materiallagen 1. Das Materiallagengefüge 9 ist an eine Welle 7 angebunden.

Die Materiallage 1 ist in der Figur mit wenigstens einer weiteren Materiallage verfestigt. Die Figur zeigt eine Mehrzahl an miteinander verfestigten Materiallagen 1.

Die Verfestigung gelingt besonders gut durch Backlack, da dieser auf einfache Weise aufgebracht werden kann. Ein vornehmlich anschließendes Verbacken der Materiallagen 1 schafft eine stabile und robuste Verbindung.

FIG 6 zeigt eine Seitenansicht der dynamoelektrischen rotatorischen Maschine 15.

Die Maschine 15 weist den Rotor 11 auf, welcher die Welle 7 und das Materiallagengefüge 9 umfasst. Der Rotor 11 kann in einem Stator 12 gemäß der Rotationsachse R rotieren.

## Patentansprüche

1. Verfahren zur Herstellung einer Materiallage (1) für einen Rotor (11) oder einen Stator (12) einer dynamoelektrischen rotatorischen Maschine mit einer Lagendicke (d) zwischen 0,5 und 500 µm mit folgenden Schritten:
- Aufbringen einer Suspension, aufweisend wenigstens ein Bindemittel und Festteilchen, durch eine Schablone auf eine Grundfläche zum Erhalt eines Grünkörpers,
- Austreiben des Bindemittels aus dem Grünkörper, insbesondere mittels Entbinderung,
- Schaffen eines dauerhaften Zusammenhalts der Festteilchen durch Erwärmung und/oder mittels Verdichtung, insbesondere mittels Sinterung.

2. Verfahren nach Anspruch 1, wobei auf die Materiallage (1) auf wenigstens einer Lagenseite ein Isolationsmaterial (2, 3) aufgebracht wird.

3. Verfahren nach einem der vorhergehenden Ansprüche, wobei auf die Materiallage auf beiden Lagenseiten ein Isolationsmaterial (2, 3) aufgebracht wird.

4. Verfahren nach einem der vorhergehenden Ansprüche, wobei auf die Materiallage (1) ein Lack, insbesondere Backlack, aufgebracht wird.

5. Verfahren nach einem der vorhergehenden Ansprüche, wobei die Festteilchen Teilchen aus elektrisch und/oder magnetisch leitfähigem Material, insbesondere Metallteilchen, umfassen.

6. Verfahren nach einem der vorhergehenden Ansprüche, wobei die Festteilchen Teilchen aus weichmagnetischem Material umfassen.

7. Verfahren nach einem der vorhergehenden Ansprüche, wobei die Suspension strukturviskos ist.

8. Materiallage (1) für einen Rotor (11) oder einen Stator (12) einer dynamoelektrischen Maschine (15), hergestellt nach einem Verfahren nach einem der Ansprüche 1 bis 7,
- wobei die Materiallage (1) eine Lagendicke (d) zwischen 0,5 und 500 µm, insbesondere zwischen 10 und 100 µm, aufweist,
- wobei die Materiallage (1) ein weichmagnetisches Material aufweist,
- wobei die Materiallage (1) auf wenigstens einer Lagenseite ein Isolationsmaterial (2, 3) aufweist.

9. Materiallage (1) nach Anspruch 8, wobei die Materiallage (1) auf beiden Lagenseiten ein Isolationsmaterial (2, 3) aufweist.

10. Materiallage (1) nach einem der Ansprüche 8 oder 9, wobei die Materiallage (1) Lack, insbesondere Backlack, aufweist.

11. Materiallage (1) nach einem der Ansprüche 8 bis 10, wobei die Materiallage (1) mit wenigstens einer weiteren Materiallage (1) verfestigbar ist.

12. Materiallage (1) nach einem der Ansprüche 8 bis 11, wobei die Materiallage (1) eine im Wesentlichen mittig angeordnete Materialaussparung (5), aufweist.

13. Verfahren zur Herstellung eines Materiallagengefüges (9) für einen Rotor (11) einer dynamoelektrischen rotatorischen Maschine (15) mit folgenden Schritten:
- Additive Fertigung einer ersten Materiallage (1) nach einem der Ansprüche 8 bis 12, wobei die erste Materiallage (1) wenigstens eine Materialschicht umfasst,
- Aufbringen eines Isolationsmaterials (2, 3) auf die erste Materiallage (1),
- Additive Fertigung wenigstens einer weiteren Materiallage (1), wobei die wenigstens eine weitere Materiallage (1) wenigstens eine Materialschicht umfasst,
- Aufbringen eines Isolationsmaterials (2, 3) auf die wenigstens eine weitere Materiallage (1),
- Zusammenfügen der ersten und der wenigstens einen weiteren Materiallage (1),
- Gegenseitiges Verfestigen der Materiallagen (1).

14. Verfahren nach Anspruch 13, wobei mittels einer Mehrzahl an Materiallagen (1) mit einer Lagendicke (d) von 0,5 bis 500 µm ein Materiallagengefüge (9) hergestellt wird.

15. Materiallagengefüge (9) für einen Rotor (11) einer dynamoelektrischen rotatorischen Maschine (15), wobei das Materiallagengefüge (9) eine Mehrzahl übereinander angeordneter Materiallagen (1) nach einem der Ansprüche 8 bis 12 aufweist.

## Claims

1. Method for producing a material layer (1) for a rotor (11) or a stator (12) of a dynamoelectric rotary machine with a layer thickness (d) between 0.5 and 500 µm with the following steps:
- applying a suspension, having at least one binding agent and solid particles, through a template onto a base area in order to obtain a green body,
- driving the binding agent out of the green body, in particular by means of debindering,
- creating a permanent cohesion of the solid particles by heating and/or by means of compaction, in particular by means of sintering.

2. Method according to claim 1, wherein an insulation material (2, 3) is applied to the material layer (1) on at least one layer side.

3. Method according to one of the preceding claims, wherein an insulation material (2, 3) is applied to the material layer on both layer sides.

4. Method according to one of the preceding claims, wherein a varnish, in particular thermosetting varnish, is applied to the material layer (1).

5. Method according to one of the preceding claims, wherein the solid particles comprise particles of electrically and/or magnetically conductive material, in particular metal particles.

6. Method according to one of the preceding claims, wherein the solid particles comprise particles from soft-magnetic material.

7. Method according to one of the preceding claims, wherein the suspension is pseudoplastic.

8. Material layer (1) for a rotor (11) or a stator (12) of a dynamoelectric machine (15), produced according to one of claims 1 to 7,
- wherein the material layer (1) has a layer thickness (d) between 0.5 and 500 µm, in particular between 10 and 100 µm,
- wherein the material layer (1) has a soft-magnetic material,
- wherein the material layer (1) has an insulation material (2, 3) on at least one layer side.

9. Material layer (1) according to claim 8, wherein the material layer (1) has an insulation material (2, 3) on both layer sides.

10. Material layer (1) according to one of claims 8 or 9, wherein the material layer (1) has varnish, in particular thermosetting varnish.

11. Material layer (1) according to one of claims 8 to 10, wherein the material layer (1) can be strengthened with at least one further material layer (1).

12. Material layer (1) according to one of claims 8 to 11, wherein the material layer (1) has a material cut-out (5) arranged substantially centrally.

13. Method for producing a material layer structure (9) for a rotor (11) of a dynamoelectric rotary machine (15) with the following steps:
- additive manufacturing of a first material layer (1) according to one of claims 8 to 12, wherein the first material layer (1) comprises at least one material slice,
- applying an insulation material (2, 3) to the first material layer (1),
- additive manufacturing of at least one further material layer (1), wherein the at least one further material layer (1) comprises at least one material slice,
- applying an insulation material (2, 3) to the at least one further material layer (1),
- joining the first and the at least one further material layer (1),
- reciprocally strengthening the material layers (1).

14. Method according to claim 13, wherein a material layer structure (9) is produced by means of a plurality of material layers (1) with a layer thickness (d) of 0.5 to 500 µm.

15. Material layer structure (9) for a rotor (11) of a dynamoelectric rotary machine (15), wherein the material layer structure (9) has a plurality of material layers (1) arranged one above the other according to one of claims 8 to 12.

## Revendications

1. Procédé de fabrication d'une strate (1) de matériau pour un rotor (11) ou un stator (12) d'une machine dynamoélectrique tournante ayant une épaisseur (d) d'une strate comprise entre 0,5 et 500 µm comprenant les stades suivants :
- dépôt d'une suspension, comportant au moins un liant et des particules solides par un gabarit sur une surface de base, pour obtenir un corps à vert,
- extraction du liant du corps à vert, en particulier au moyen d'un enlèvement de liant,
- obtention d'une cohérence permanente des particules solides par chauffage et/ou au moyen d'une compression, en particulier au moyen d'un frittage.

2. Procédé suivant la revendication 1, dans lequel on dépose sur la strate (1) de matériau, sur au moins une face de la strate, du matériau (2, 3) isolant.

3. Procédé suivant l'une des revendications précédentes, dans lequel on dépose, sur la strate de matériau sur les deux faces de la strate, du matériau (2, 3) isolant.

4. Procédé suivant l'une des revendications précédentes, dans lequel on dépose sur la strate (1) de matériau un vernis, en particulier un backlack.

5. Procédé suivant l'une des revendications précédentes, dans lequel les particules solides comprennent des particules de matériau conducteur de l'électricité et/ou du magnétisme, en particulier des particules métalliques.

6. Procédé suivant l'une des revendications précédentes, dans lequel les particules solides comprennent des particules en un matériau à magnétisme doux.

7. Procédé suivant l'une des revendications précédentes, dans lequel la suspension est de structure visqueuse.

8. Strate (1) de matériau pour un rotor (11) ou un stator (12) d'une machine (15) dynamoélectrique, fabriquée par un procédé suivant l'une des revendications 1 à 7,
- dans laquelle la strate (1) de matériau à une épaisseur (d) de strate comprise entre 0,5 et 500 µm, en particulier comprise entre 10 et 100 µm,
- dans laquelle la strate (1) de matériau comporte un matériau à magnétisme doux,
- dans laquelle la strate (1) de matériau a du matériau (2, 3) isolant sur une face de la couche.

9. Strate (1) de matériau suivant la revendication 8, dans laquelle la strate (1) de matériau a un matériau (2, 3) isolant sur les deux faces de la strate.

10. Strate (1) de matériau suivant l'une des revendications 8 ou 9, dans laquelle la strate (1) de matériau a du vernis, en particulier du backlack.

11. Strate (1) de matériau suivant l'une des revendications 8 à 10, dans laquelle la strate (1) de matériau peut être consolidée par au moins une autre strate (1) de matériau.

12. Strate (1) de matériau suivant l'une des revendications 8 à 11, dans laquelle la strate (1) de matériau a un évidement (5) de matériau sensiblement au milieu.

13. Procédé de fabrication d'une texture (9) de strates de matériau pour un rotor (11) d'une machine (15) dynamoélectrique tournante comprenant les stades suivants :
- fabrication additive d'une première strate (1) de matériau suivant l'une des revendications 8 à 12, dans laquelle la première strate (1) de matériau comprend une couche de matériau,
- dépôt d'un matériau (2, 3) isolant sur la première strate (1) de matériau,
- fabrication additive d'au moins une autre strate (1) de matériau, la au moins une autre strate (1) de matériau comprenant au moins une couche de matériau, dans lequel la au moins une autre strate (1) de matériau comprend au moins une couche de matériau,
- dépôt d'un matériau (2, 3) isolant sur la au moins une autre strate (1) de matériau,
- jonction de la première et de la au moins une autre strate (1) de matériau,
- consolidation mutuelle des strates (1) de matériau.

14. Procédé suivant la revendication 13, dans lequel, au moyen d'une pluralité de strates (1) de matériau d'une épaisseur (d) de strate de 0,5 à 500 µm, on fabrique une texture (9) de strates de matériau.

15. Texture (9) de strates de matériau pour un rotor (11) d'une machine (15) dynamoélectrique tournante, dans lequel la texture (9) de strates de matériau a une pluralité de strates (1) de matériau suivant l'une des revendications 8 à 12 disposées d'une manière superposée.
